# EUROPÄISCHE PATENTSCHRIFT

(11) **EP 3 319 833 B1**
(45) Veröffentlichungstag und Bekanntmachung des Hinweises auf die Patenterteilung: **29.06.2022**
(21) Anmeldenummer: 16728643.4
(22) Anmeldetag: 31.05.2016
(51) Int. Cl.: B60L 58/12

(54) **NOTFAHRMODUS FÜR EIN ELEKTROFAHRZEUG**
EMERGENCY DRIVING MODE FOR AN ELECTRIC VEHICLE
MODE DÉGRADÉ POUR VÉHICULE ÉLECTRIQUE

(30) Priorität: 08.07.2015 DE 102015212718
(43) Veröffentlichungstag der Anmeldung: 16.05.2018
(73) Patentinhaber: Bayerische Motoren Werke Aktiengesellschaft, 80809 München (DE)
(72) Erfinder: PFEIFER, Reiner, 81371 Muenchen (DE)
(86) Internationale Anmeldenummer: PCT/EP2016/062222
(87) Internationale Veröffentlichungsnummer: WO 2017/005409

(56) Entgegenhaltungen:
- WO-A1-94/16304
- WO-A1-2014/204649
- DE-A1-102012 206 518
- DE-A1-102012 211 516

## Beschreibung

Die Erfindung betrifft ein Elektrofahrzeug und ein Verfahren zur Reichweitenerhöhung eines Elektrofahrzeugs.

Elektrofahrzeuge, insbesondere Elektro-Scooter, mit Elektromotoren, die von Speicherzellen mit Energie versorgt werden sind bekannt und werden aufgrund ihrer geringen Schadstoff- und Lärmemissionen geschätzt.

Der Nachteil dieser Fahrzeuge besteht darin, dass sie im Vergleich zu Fahrzeugen mit einem Verbrennungsmotor nur über eine geringe Reichweite verfügen und auch nicht schnell aufgeladen werden können. Eine Rückfallebene, analog zu den Reservekanistern bei Fahrzeugen mit einem Verbrennungsmotor, ist nicht vorhanden.

Bei verbrauchter Batteriekapazität folgt damit zwangsläufig der Stillstand des Elektrofahrzeugs. Dieser Umstand ist nicht nur wenig erfreulich für den Nutzer des Elektrofahrzeugs, sondern kann auch zu Notsituationen führen bzw. diese verschärfen, sollte der Nutzer sich bereits in einer Notsituation befinden.

Aus der DE 10 2012 206 518 A1 ist ein Verfahren zur Steuerung eines Elektrofahrzeugs in einem Notbetriebsmodus bekannt, beim dem das Fahrzeug in einer Notsituation auch dann bewegt werden kann, wenn der Normalbetrieb nicht möglich ist. Der Notbetriebsmodus wird hierbei über Standardbedienkomponenten angefordert, um einen einfachen und sicheren Notstart auch in Paniksituationen sicherzustellen.

Nachteilig bei diesem Verfahren ist, dass eine unbeabsichtigte Aktivierung des Notbetriebsmodus nicht ausgeschlossen werden kann.

Aufgabe der Erfindung ist es, ein Elektrofahrzeug und ein Verfahren für ein Elektrofahrzeug bereitzustellen, das es erlaubt, die Reichweite des Elektrofahrzeugs in Notsituationen zu erweitern, wobei eine unbeabsichtigte Aktivierung des Notbetriebsmodus ausgeschlossen werden kann.

Zur Lösung der Aufgabe ist ein Verfahren zur Reichweitenerhöhung eines Elektrofahrzeugs, insbesondere eines Elektro-Scooters, mit einem Elektromotor, mindestens einer Speicherzelle und einer Steuerung für den Elektromotor, mit folgenden Schritten vorgesehen:
a) Einleiten der Aktivierung einer Restkapazität der Speicherzelle durch den Bediener, wobei die Nutzung der Restkapazität im normalen Fahrbetrieb durch die Steuerung blockiert ist, und
b) Freischalten der Restkapazität.

Die Aktivierung der Restkapazität in Schritt a) wird durch die Eingabe eines Aktivierungscodes mittels einer extra ausgeführten Eingabevorrichtung eingeleitet. Die Eingabevorrichtung umfasst hierbei speziell die Aktivierung der Restkapazität. Auf diese Weise kann die unbeabsichtigte Aktivierung und Nutzung der Restkapazität und eine damit zusammenhängende mögliche Schädigung der Speicherzellen ausgeschlossen werden.

Um die Speicherzellen zu schonen und Beschädigungen zu vermeiden, die die Kapazität oder die Leistungsfähigkeit der Speicherzellen mindern, wird nach dem Stand der Technik nur etwa 90% der in den Speicherzellen zur Verfügung stehenden Energie verwendet. Das bedeutet, dass die Speicherzellen in normalem Gebrauch nie vollständig entladen werden, da die Nutzung der Speicherzellen bei einem Energiestand von etwa 10% steuerungsseitig blockiert wird und erst nach erneuter Aufladung wieder freigegeben wird. Diese Restkapazität lässt sich jedoch nutzen, um einer Notsituation zu entkommen, insbesondere wenn eine mögliche Beschädigung der Speicherzelle im Vergleich zu den Opportunitätskosten der Notsituation zu vernachlässigen ist. Das erfindungsgemäße Verfahren erlaubt diese Nutzung der Restkapazität und führt somit zu einer verbesserten Sicherheit.

Vorzugsweise wird die Aktivierung der Restkapazität im Schritt a) durch Eingeben einer Tastenkombination eingeleitet.

Bevorzugt umfasst das Verfahren zusätzlich den folgenden Schritt zwischen den Schritten a) und b):
c) Bestätigen der Aktivierung der Restkapazität durch den Bediener.

Indem der Bediener in einem weiteren Schritt die Aktivierung der Restkapazität bestätigen muss, wird eine zusätzliche Sicherheitshürde bereitgestellt, die eine unbeabsichtigte Aktivierung der Restkapazität verhindert.

Gemäß einer vorteilhaften Ausführungsform umfasst das Verfahren zusätzlich den folgenden Schritt zwischen den Schritten a) und c):
d) Abgabe eines Hinweises an den Bediener durch das Elektrofahrzeug, dass die Aktivierung der Restkapazität die Speicherzelle schädigen kann.

Dieser Schritt erlaubt es, den Bediener auf die möglichen Folgen einer Aktivierung der Restkapazität hinzuweisen, und ermöglicht es dem Fahrzeughersteller, sich gegen Schadensersatzansprüche zusätzlich abzusichern.

Gemäß einer weiteren vorteilhaften Ausführungsform umfasst das Verfahren zusätzlich den folgenden Schritt zwischen den Schritten a) und c):
e) Abgabe eines Hinweises an den Bediener durch das Elektrofahrzeug, dass die Aktivierung der Restkapazität in einem Speicher protokolliert wird und vom Kundendienst ausgelesen werden kann.

Mit diesem Hinweis wird der Bediener zusätzlich vor Missbrauch gewarnt und darüber informiert, dass die Aktivierung der Restkapazität aufgezeichnet wird.

Vorzugsweise umfasst das Verfahren zusätzlich den folgenden Schritt:
f) Protokollieren der Aktivierung der Restkapazität in einem Speicher. Hierdurch wird jede Aktivierung der Restkapazität abgespeichert und erlaubt es beispielsweise dem Kundendienst, eventuell notwendige Maßnahmen zu erkennen und durchzuführen.

Durch die Aktivierung der Restkapazität, kann sogar eine vollständige Leerung der wenigstens einen Speicherzelle möglich sein. Auf diese Weise steht die maximale vorhandene Energiemenge zur Verfügung.

Alternativ ist es möglich, eine Untergrenze innerhalb des Restkapazität zu definieren, unterhalb derjenigen die Speicherzelle nicht weiter entleert werden kann.

Erfindungsgemäß ist zur Lösung der oben genannten Aufgabe auch ein Elektrofahrzeug, insbesondere Elektro-Scooter, mit einem Elektromotor und mindestens einer Speicherzelle vorgesehen, deren Restkapazität durch ein Verfahren freigeschaltet werden kann, mit einem Elektromotor, wenigstens einer Speicherzelle und einer Steuerung, die im normalen Fahrbetrieb eine Nutzung der Restkapazität der Speicherzelle blockiert. Es ist eine Eingabevorrichtung vorhanden, die mit der Steuerung gekoppelt ist, wobei auf eine Betätigung der Eingabevorrichtung hin die Steuerung die Nutzung der Restkapazität freigibt. Die Eingabevorrichtung ist hierbei eine extra ausgeführte Eingabevorrichtung, die speziell die Aktivierung der Restkapazität umfasst.

Vorzugsweise ist die Steuerung so ausgebildet, dass die Nutzung der Restkapazität eine vollständige Leerung der Speicherzelle und nicht nur eines Teiles der Restkapazität erlaubt. Somit kann die komplette vorhandene Energiemenge genutzt werden.

Weitere Vorteile und Merkmale ergeben sich aus der nachfolgenden Beschreibung in Verbindung mit den beigefügten Zeichnungen. In diesen zeigen:
- Figur 1 eine schematische Zeichnung eines erfindungsgemäßen Elektrofahrzeugs, und
- Figur 2 ein Diagramm des erfindungsgemäßen Verfahrens.

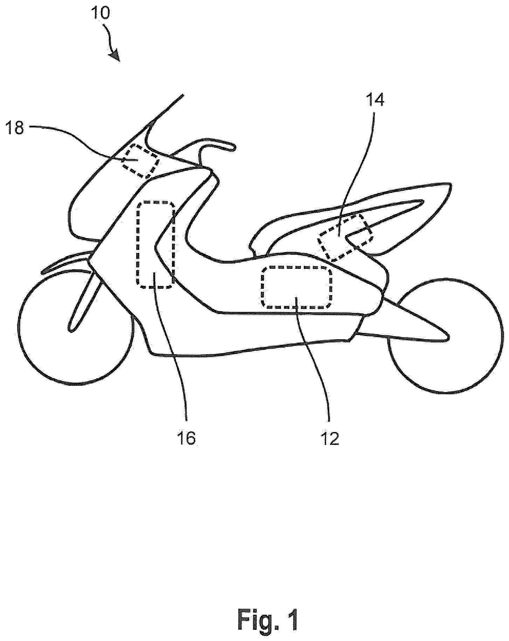

In Figur 1 ist ein Elektrofahrzeug 10 gezeigt, mit einem Elektromotor 12 und wenigstens einer Speicherzelle 14 zur Speicherung von elektrischer Energie. Eine Steuerung 16 steuert den Motor 12 und ist mit der Speicherzelle 14 gekoppelt. Ein Gasgriff ist mit der Steuerung 16 gekoppelt, so dass die Steuerung 16 das Signal vom Gasgriff in einen Energieabfluss von der Speicherzelle 14 umsetzt.

Im normalen Fahrbetrieb blockiert die Steuerung 16 aber einen weiteren Energieabfluss, sobald eine vorgegebene Restkapazität der Speicherzelle 14, z. B. von 10%, erreicht ist, d. h. bevor die Speicherzelle 14 komplett entleert ist.

Eine vom Fahrer zu bedienende Energieabgabevorrichtung 18 ist mit der Steuerung 16 gekoppelt.

Mittels eines Verfahrens kann die Restkapazität der Speicherzelle 14 freigeschaltet werden kann. Hierfür muss über die Eingabevorrichtung 18 die Nutzung der Restkapazität aktiviert werden, woraufhin die Steuerung 16 die Nutzung der Restkapazität freigibt.

Die Steuerung 16 kann hierbei so ausgebildet sein, dass die Nutzung der Restkapazität eine vollständige Leerung der Speicherzelle 14 erlaubt.

Das Verfahren ist jedoch nicht auf Elektrofahrzeuge mit einer Speicherzelle 14 begrenzt, sondern kann auch genutzt werden, um in einer (nicht dargestellten) Ausführungsform die Restkapazität eines Elektrofahrzeugs 10 mit mehreren Speicherzellen 14 freizuschalten.

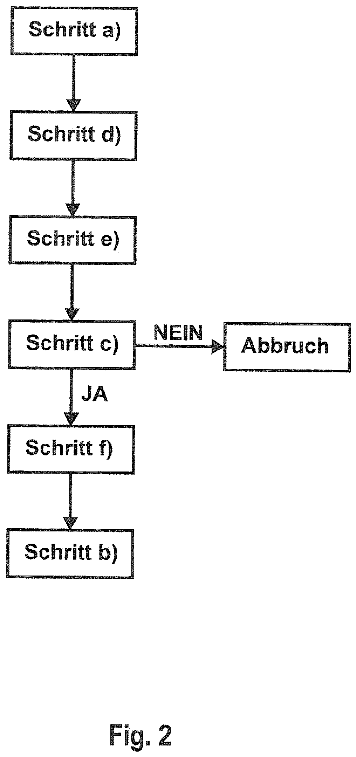

In Figur 2 ist das Verfahren zur Reichweitenerhöhung eines Elektrofahrzeugs 10, mit einem Elektromotor 12, mindestens einer Speicherzelle 14 und einer Steuerung 16 für den Elektromotor 12 gezeigt. Es umfasst folgende Schritte:
a) Einleiten der Aktivierung einer Restkapazität der Speicherzelle 14 durch den Bediener, wobei die Nutzung der Restkapazität im normalen Fahrbetrieb durch die Steuerung 16 blockiert ist,
b) Freischalten der Restkapazität,
c) Bestätigen der Aktivierung der Restkapazität durch den Bediener,
d) Abgabe eines Hinweises an den Bediener durch das Elektrofahrzeug 10, dass die Aktivierung der Restkapazität die Speicherzelle 14 schädigen kann,
e) Abgabe eines Hinweises an den Bediener durch das Elektrofahrzeug 10, dass die Aktivierung der Restkapazität in einem Speicher protokolliert wird und vom Kundendienst ausgelesen werden kann, und
f) Protokollieren der Aktivierung der Restkapazität in einem Speicher, die in der im Verfahrensdiagramm dargestellten Weise miteinander verknüpft sind.

Die Aktivierung der Restkapazität in Schritt a) kann durch die Eingabe eines Aktivierungscodes eingeleitet werden. Dies kann insbesondere durch Eingeben einer Tastenkombination erfolgen.

Um eine Schädigung der Speicherzelle(n) zu verhindern ist es auch möglich, dass nach einer vorbestimmten Anzahl von Betätigungen der Eingabevorrichtung 18 und Entleerungen der Speicherzelle(n) unter Nutzung der Restkapazität eine weitere Überbrückung der Sicherheitsgrenze nicht mehr möglich ist. Dann ist nur ein Betreiben des Fahrzeugs bis Erreichen der Restkapazität möglich.

## Patentansprüche

1. Verfahren zur Reichweitenerhöhung eines Elektrofahrzeugs (10), insbesondere eines Elektro-Scooters, mit einem Elektromotor (12), mindestens einer Speicherzelle (14) und einer Steuerung (16) für den Elektromotor (12), mit folgenden Schritten:
a) Einleiten der Aktivierung einer Restkapazität der Speicherzelle (14) durch den Bediener, wobei die Nutzung der Restkapazität im normalen Fahrbetrieb durch die Steuerung (16) blockiert ist, und
b) Freischalten der Restkapazität,
**dadurch gekennzeichnet, dass** die Aktivierung der Restkapazität in Schritt a) durch die Eingabe eines Aktivierungscodes mittels einer extra ausgeführten Eingabevorrichtung eingeleitet wird, wobei die Eingabevorrichtung speziell die Aktivierung der Restkapazität umfasst.

2. Verfahren nach Anspruch 1, **dadurch gekennzeichnet, dass** die Aktivierung der Restkapazität in Schritt a) durch Eingeben einer Tastenkombination eingeleitet wird.

3. Verfahren nach einem der vorhergehenden Ansprüche, **dadurch gekennzeichnet, dass** das Verfahren zusätzlich den folgenden Schritt zwischen den Schritten a) und b) umfasst:
c) Bestätigen der Aktivierung der Restkapazität durch den Bediener.

4. Verfahren nach einem der vorhergehenden Ansprüche, **dadurch gekennzeichnet, dass** das Verfahren zusätzlich den folgenden Schritt zwischen den Schritten a) und c) umfasst:
d) Abgabe eines Hinweises an den Bediener durch das Elektrofahrzeug (10), dass die Aktivierung der Restkapazität die Speicherzelle (14) schädigen kann.

5. Verfahren nach einem der vorhergehenden Ansprüche, **dadurch gekennzeichnet, dass** das Verfahren zusätzlich den folgenden Schritt zwischen den Schritten a) und c) umfasst:
e) Abgabe eines Hinweises an den Bediener durch das Elektrofahrzeug (10), dass die Aktivierung der Restkapazität in einem Speicher protokolliert wird und vom Kundendienst ausgelesen werden kann.

6. Verfahren nach einem der vorhergehenden Ansprüche, **dadurch gekennzeichnet, dass** das Verfahren zusätzlich den folgenden Schritt umfasst:
f) Protokollieren der Aktivierung der Restkapazität in einem Speicher.

7. Verfahren nach einem der vorhergehenden Ansprüche, **dadurch gekennzeichnet, dass** durch die Aktivierung der Restkapazität eine vollständige Leerung der wenigstens einen Speicherzelle (14) möglich ist.

8. Elektrofahrzeug (10), insbesondere Elektro-Scooter, mit einem Elektromotor (12) und mindestens einer Speicherzelle (14), dessen Restkapazität durch ein Verfahren nach einem der Ansprüche 1 bis 7 freigeschaltet werden kann, mit einem Elektromotor (12), wenigstens einer Speicherzelle (14) und einer Steuerung (16), die im normalen Fahrbetrieb eine Nutzung der Restkapazität der Speicherzelle (14) blockiert, **dadurch gekennzeichnet, dass** eine Eingabevorrichtung (18) vorhanden ist, die mit der Steuerung (16) gekoppelt ist, wobei auf eine Betätigung der Eingabevorrichtung (18) hin, die Steuerung (16) die Nutzung der Restkapazität freigibt, wobei die Eingabevorrichtung (18) eine extra ausgeführte Eingabevorrichtung ist, die speziell die Aktivierung der Restkapazität umfasst.

9. Elektrofahrzeug nach Anspruch 8, **dadurch gekennzeichnet, dass** die Steuerung (16) so ausgebildet ist, dass die Nutzung der Restkapazität eine vollständige Leerung der Speicherzelle (14) erlaubt.

## Claims

1. Method for increasing the range of an electric vehicle (10), in particular an electric scooter, with an electric motor (12), at least one storage cell (14) and a controller (16) for the electric motor (12), with the following steps:
a) initiating the activation of a residual capacity of the storage cell (14) by the operator, wherein the use of the residual capacity is blocked in the normal driving mode by the controller (16), and
b) unlocking the residual capacity,
**characterized in that** the activation of the residual capacity in step a) is initiated by the input of an activation code by way of an extra input device, wherein the input device specifically comprises the activation of the residual capacity.

2. Method according to Claim 1, **characterized in that** the activation of the residual capacity in step a) is initiated by the input of a key combination.

3. Method according to either of the preceding claims, **characterized in that** the method additionally comprises the following step between the steps a) and b):
c) confirming the activation of the residual capacity by the operator.

4. Method according to one of the preceding claims, **characterized in that** the method additionally comprises the following step between the steps a) and c):
d) outputting an indication to the operator by the electric vehicle (10) that the activation of the residual capacity can damage the storage cell (14).

5. Method according to one of the preceding claims, **characterized in that** the method additionally comprises the following step between the steps a) and c):
e) outputting an indication to the operator by the electric vehicle (10) that the activation of the residual capacity is logged in a memory and can be read out by customer services.

6. Method according to one of the preceding claims, **characterized in that** the method additionally comprises the following step:
f) logging the activation of the residual capacity in a memory.

7. Method according to one of the preceding claims, **characterized in that**, by activating the residual capacity, complete discharging of the at least one storage cell (14) is possible.

8. Electric vehicle (10), in particular an electric scooter, with an electric motor (12) and at least one storage cell (14), the residual capacity of which can be unlocked by a method according to one of Claims 1 to 7, with an electric motor (12), at least one storage cell (14) and a controller (16) that blocks the use of the residual capacity of the storage cell (14) in the normal driving mode, **characterized in that** there is an input device (18) that is coupled to the controller (16), wherein the controller (16) unlocks the use of the residual capacity on actuation of the input device (18), wherein the input device (18) is an extra input device that specifically comprises the activation of the residual capacity.

9. Electric vehicle according to Claim 8, **characterized in that** the controller (16) is implemented so that the use of the residual capacity enables complete discharging of the storage cell (14).

## Revendications

1. Procédé permettant d'augmenter l'autonomie d'un véhicule électrique (10), en particulier d'un scooter électrique, comprenant un moteur électrique (12), au moins un élément accumulateur (14) et un dispositif de commande (16) pour le moteur électrique (12), comprenant les étapes suivantes consistant à :
a) entamer l'activation d'une capacité restante de l'élément accumulateur (14) par l'utilisateur, l'utilisation de la capacité restante étant bloquée en mode de conduite normale par le dispositif de commande (16), et
b) libérer la capacité restante,
**caractérisé en ce que** l'activation de la capacité restante à l'étape a) est entamée par l'entrée d'un code d'activation au moyen d'un dispositif d'entrée spécialement conçu, le dispositif d'entrée comprenant spécifiquement l'activation de la capacité restante.

2. Procédé selon la revendication 1, **caractérisé en ce que** l'activation de la capacité restante à l'étape a) est entamée par l'entrée d'un raccourci clavier.

3. Procédé selon l'une quelconque des revendications précédentes, **caractérisé en ce que** le procédé comprend en outre l'étape suivante entre les étapes a) et b), consistant à :
c) confirmer l'activation de la capacité restante par l'utilisateur.

4. Procédé selon l'une quelconque des revendications précédentes, **caractérisé en ce que** le procédé comprend en outre l'étape suivante entre les étapes a) et c), consistant à :
d) émettre par le véhicule électrique (10) une indication à l'intention de l'utilisateur que l'activation de la capacité restante peut endommager l'élément accumulateur (14).

5. Procédé selon l'une quelconque des revendications précédentes, **caractérisé en ce que** le procédé comprend en outre l'étape suivante entre les étapes a) et c), consistant à :
e) émettre par le véhicule électrique (10) une indication à l'intention de l'utilisateur que l'activation de la capacité restante est enregistrée dans une mémoire et peut être consultée par le service client.

6. Procédé selon l'une quelconque des revendications précédentes, **caractérisé en ce que** le procédé comprend en outre l'étape suivante consistant à :
f) enregistrer l'activation de la capacité restante dans une mémoire.

7. Procédé selon l'une quelconque des revendications précédentes, **caractérisé en ce que** l'activation de la capacité restante permet de vider complètement ledit au moins un élément accumulateur (14).

8. Véhicule électrique (10), en particulier scooter électrique, comprenant un moteur électrique (12) et au moins un élément accumulateur (14) dont la capacité restante peut être libérée par un procédé selon l'une quelconque des revendications 1 à 7, comprenant un moteur électrique (12), au moins un élément accumulateur (14) et un dispositif de commande (16) qui bloque en mode de conduite normale une utilisation de la capacité restante de l'élément accumulateur (14),
**caractérisé en ce qu'**un dispositif d'entrée (18) est prévu qui est couplé au dispositif de commande (16), dans lequel, suite à un actionnement du dispositif d'entrée (18), le dispositif de commande (16) libère l'utilisation de la capacité restante, le dispositif d'entrée (18) étant un dispositif d'entrée spécialement conçu qui comprend spécifiquement l'activation de la capacité restante.

9. Véhicule électrique selon la revendication 8, **caractérisé en ce que** le dispositif de commande (16) est réalisé de telle sorte que l'utilisation de la capacité restante permet de vider complètement l'élément accumulateur (14).
